# EUROPÄISCHE PATENTSCHRIFT

(11) **EP 1 960 315 B1**
(45) Veröffentlichungstag und Bekanntmachung des Hinweises auf die Patenterteilung: **29.05.2013**
(21) Anmeldenummer: 06804848.7
(22) Anmeldetag: 01.11.2006
(51) Int. Cl.: C02F 3/00, C02F 3/10, C02F 1/28, C02F 1/68, B01J 20/10, B01D 15/00, C02F 103/08, C02F 101/32

(54) **ZUSAMMENSETZUNG UND VERFAHREN ZUR BIOREMEDIATION VON MIT KOHLENWASSERSTOFFEN VERSCHMUTZTEM WASSER**
COMPOSITION AND BIOREMEDIATION METHOD FOR WATER POLLUTED BY HYDROCARBONS
COMPOSITION ET PROCÉDÉ DE BIORÉSTAURATION D'EAUX POLLUÉES PAR DES HYDROCARBURES

(30) Priorität: 07.11.2005 CH 17792005; 08.11.2005 WO PCT/CH2005/000658; 15.09.2006 CH 14732006
(43) Veröffentlichungstag der Anmeldung: 27.08.2008
(73) Patentinhaber: OTI Greentech Group AG, 6300 Zug (CH)
(72) Erfinder: KROH, Werner, CH-3077 Enggistein (CH)
(74) Vertreter: Rentsch Partner AG
(86) Internationale Anmeldenummer: PCT/CH2006/000614
(87) Internationale Veröffentlichungsnummer: WO 2007/051338

(56) Entgegenhaltungen:
- WO-A-00/16877
- WO-A-93/14034
- WO-A-2004/113245
- DE-A1- 1 811 131
- DE-U1- 8 907 023
- FR-A- 1 315 980
- US-A- 5 653 883
- US-B1- 6 168 712

## Beschreibung

### Technisches Gebiet

Die vorliegende Erfindung betrifft eine Zusammensetzung zur Bioremediation von mit Kohlenwasserstoffen, insbesondere mit Rohöl verschmutztem Wasser. Die Erfindung betrifft auch ein Verfahren zur Bioremediation von mit Kohlenwasserstoffen, insbesondere mit Rohöl verschmutztem Gewässern.

### Stand der Technik

Der Transport von Rohöl bzw. seinen diversen Fraktionen von den Förderstellen respektive von den Produktionszentren bis zum Verbraucher ist ein risikoreiches Unternehmen und erfolgt über lange Strecken mit Tankschiffen oder über Pipelines. Bei immer wieder stattfindenden Tankerhavarien können Millionen von Tonnen Rohöl freigesetzt werden. Auch bei Lecks oder Anschlägen auf Pipelines gelangen grosse Mengen von Öl in Meere oder Binnengewässer und entfalten dort ihre verheerende Wirkungen auf die Ökosysteme. Doch selbst für Ölverschmutzungen von weniger katastrophalem Ausmass, wie sie leider zum Beispiel durch das illegale Spülen von Öltanks auf See allenthalben anzutreffen sind, entstehen gravierende Schäden für die Umwelt Vor allem im Küstenbereich führen die Ölverschmutzungen zu schwerwiegenden wirtschaftlichen und sozialen Folgen.

Dabei geht es nicht lediglich darum, das ölverschmutzte Wasser vom Öl zu befreien, wie dies z. B. bei den bekannten Absaugverfahren der Fall ist; anzustreben ist vielmehr eine einfache, endgültige und umweltgerechte Entsorgung des Öls und der darin enthaltenen giftigen Kohlenwasserstoffe. Um das auf dem verschmutzten Gewässer schwimmende Öl zu beseitigen, finden bislang hauptsächlich die nachfolgend aufgeführten Massnahmen Anwendung:
1. Absaugen oder mechanisches Aufnehmen des ausgelaufenen Öls durch spezialisierte Schiffe, und anschliessender Abtransport und Entsorgung
2. Binden und/oder Stabilisierung des freischwimmenden Öls mit oleophilen oder hydrophobierten Pulver- oder Fasergemischen auf der Gewässeroberfläche und anschliessende Aufnahme, Abtransport und nachfolgende Entsorgung.

In der Praxis lässt sich jedoch nur ein geringer Teil des Öls absaugen, abtransportieren und eventuell deponieren oder verbrennen. Zudem werden Lagerung oder Verbrennung oft ohne Rücksicht auf die ökologische Verträglichkeit durchgeführt, so dass diese Massnahmen wiederum auf heftigen öffentlichen Widerstand stossen. Inzwischen mangelt es in den meisten Ländern auch an Deponiefläche für solche kritischen Abfälle und in vielen Ländern ist eine derartige Beseitigung von freischwimmenden Ölen gesetzlich verboten.

Die WO 93/14034 A beschreibt den Einsatz von mineralogischen Sorptionsmittel bei der Reinigung ölverschmutzter Gewässer. Es wird zum Entfernen der Rohölverschmutzung eine Zusammensetzung beschrieben die u.a. Siliciumkarbid (SiC) einhält. Für den Reaktionsablauf ist neben dem SiC noch mindestens eine weitere Komponente notwenig, welche im Anschluss an die Sorption das Öl entsprechend bindet.

Die Verwendung von mineralogischen Zusammensetzungen zur Reinigung ölverschmutzter Gewässer wird ebenfalls in der FR-A-1315980 vorgeschlagen. Zum Einsatz kommen in einer bevorzugten Ausführungsform pulverförmiger Kalk, Feldspat, Glimmer, Milchquarz, Amphibol und Hornblende. Die Zusammensetzung wird direkt auf die Ölverschmutzung aufgebracht

in der US-A-5653883 wird ein Verfahren und eine Anlage zur biotechnologischen Abwasserreinigung beschrieben. Die mit Kohlenwasserstoffen verunreinigten Abwässer werden in Rührreaktoren unter Einsatz von Mikroorganismen abgebaut. Diese Mikroorganismen sind in einem Biofilm auf mineralogischen Trägerpartikeln angesiedelt, um beim Abziehen des gereinigten Wassers die Mikroorganismen mit ihren Trägerpartikeln durch Filter zurückhalten zu können. Die Trägerpartikel die in der Anlage zum Einsatz kommen umfassen beispielsweise Aktivkohle, Sand, Aluminiumoxid in Pulverform.

Es sind eine ganze Reihe von Mitteln und Verfahren zum Binden von Ölverschmutzungen auf Gewässeroberflächen bekannt. Bei der Beschreibung dieser Bindemittel im Stand der Technik werden die Begriffe Adsorption und Absorption oft nicht eindeutig genug voneinander unterscheiden. Im Folgenden soll die Anlagerung eines Sorptivs an die Oberfläche des Sorbens als Adsorption und die Aufnahme eines Sorptivs in das Innere des Sorbens als Absorption bezeichnet werden. Der zu sorbierende Stoff wird dabei als Sorptiv, der sorbierende Stoff als Sorbens oder Sorptionsmittel und der aufgenommene oder gebundene Stoff als Sorbat bezeichnet.

Im Allgemeinen werden zum Binden von Ölverschmutzungen auf Wasser heute Absorptionsmittel vorgeschlagen, die ein möglichst grosses Volumen Öl pro Volumen Bindemittel aufnehmen können und im vollgesogenen Zustand von der Wasseroberfläche abgesaugt werden können. Da die meisten der bekannten Mittel mit grossen inneren Oberflächen hydro- oder amphiphil sind, müssen sie erst mit erheblichem Aufwand oleophil und/oder hydrophob gemacht werden. Solche Absorptionsmittel auf Basis von expandierten und anschliessenden silikonisierten Perlit- oder Vermiculitkörnern sind bereits in der DE-2845975 aus dem Jahr 1980 zur Verwendung als Ölaufsaugmittel bekannt In der DE-2314616 wird vorgeschlagen, Krümel eines zelligen Polystyrolschaumes mit einer Dichte von 2.24 x 10⁻² und 3.21 x 10⁻² g/cm² als Absorptionsmittel für ölige, flüssige Kohlenwasserstoffe einzusetzen. Auch aus der US-3756948 ist die Verwendung von Polystyrolschaumkörnern bekannt. Aus der Literatur sind zahlreiche Absorptionsmittel bekannt, die verschiedenste organische Grund- und Zuschlagstoffe aufweisen. So beschreibt zum Beispiel die US-3630891 hydrophobierte Holzfasern und die US-3591524 ein Mittel auf Cellulosebasis, das mit einer Öl in Wasser, einer Ammonium- oder einer Amin-haltigen Emulsion hydrophobiert ist. In der US-4172039 wird poröses Kokosfasermaterial, das mit einer oleophilen und hydrophoben Substanz behandelt ist, zum Binden von Ölverschmutzungen auf Gewässern eingesetzt Es wird zudem vorgeschlagen, Behälter mit diesem Material zu füllen und auf der Wasseroberfläche treiben zu lassen und dabei das Öl zu absorbieren. In der US-6087301 ist ein granuläres Absorptionsmittel beschrieben, das neben einem Perlit-Gips-Aggregat, Maisstärke und Backpulver enthält

Im praktischen Einsatz hat sich gezeigt, dass die gebundene Öl-Absorbens-Masse, die auf der Gewässeroberfläche aufschwimmt, äusserst schwierig zu handhaben ist und sich das absorbierte Öl meist nur mit erheblichem Aufwand wieder vom Absorbens desorbieren lässt.

Ein Adsorptionsmittel auf TiO₂-Basis ist in der US-6030536 offenbart, wobei dieses Adsorptionsmittel erst nach dem Entfernen der Ölverschmutzung von der Wasseroberfläche zum Einsatz kommen soll. Im Labor oder in geeigneten Industrieeinrichtungen wird mit dem TiO₂-haltigen Adsorptionsmittel das hochviskose Wasser-Rohöl-Gemisch, das bis zu 90 % Meerwasser enthält, getrennt Das Rohöl lagert sich an das Adsorptionsmittel an, welches anschliessend in einem mehrstufigen Prozess rezykliert wird. In der Patentschrift werden ZrO₂ und Al₂O₃ als weitere Adsorbentien erwähnt.

Da eine wirksame Entfernung von Ölverschmutzungen ebenso wie die anschliessende Behandlung und Entsorgung der oft giftigen Bindemittel-Rohöl-Gemischen aufwändig und kostenintensiv ist, wird in vielen Regionen der Erde vorsätzlich darauf verzichtet. Dies hat zur Folge, dass die anfängliche Verschmutzung auf einer Gewässeroberfläche mit all ihren negativen Auswirkungen auf die marinen oder limnischen Ökosysteme zeitversetzt auch noch zur Verschmutzung von weiten Küstenbereichen mit enormen Kosten für Mensch und Umwelt führt. Gerade in Entwicklungs- und Schwellenländern besteht daher ein enormer Bedarf nach neuen, preiswerten und wirksamen Mitteln und Verfahren zur Bekämpfung von Ölverschmutzungen auf Gewässeroberflächen.

Es ist daher die Aufgabe der vorliegenden Erfindung, eine Zusammensetzung und ein Verfahren zur Bioremediation von mit Kohlenwasserstoffen, insbesondere mit Rohöl verschmutztem Wasser, zur Verfügung zu stellen, die die oben genannten Nachteile nicht aufweist

### Darstellung der Erfindung

Durch die vorliegende Erfindung, wie sie in den Patentansprüchen gekennzeichnet ist, wird eine neue Lösung für das vorgenannte Problem und die daraus abgeleitete Aufgabe angegeben. Die neue Zusammensetzung und das neue Verfahren ermöglichen eine in situ Bioremediation. Das heisst, das Rohöl wird nicht nur gebunden, sondern es wird der biologische Abbau vor Ort nicht nur beschleunigt, sondern oft überhaupt erst ermöglicht.

Bei der Zusammensetzung gemäss der Erfindung handelt es sich um ein Produkt, das zur restlosen Beseitigung von im Wasser ausgelaufenem Rohöl auch in Hafenanlagen oder bei Tankerunfälle und dergleichen effizient eingesetzt werden kann. Das marktreife Produkt ist ein trockenes, riesel- und/oder fliessfähiges Feststoffgemisch, welches eine Zusammensetzung von natürlichen mineralischen Rohstoffen umfasst, die in natürlicher Umgebung als Feststoffe vorkommen. Diese Rohstoffe werden in Primär- oder Sekundärlagerstätten (Steinbrüche, Steingruben oder sonstige Abbaustätten von mineralischen Rohstoffen) abgebaut Sie können auch im Recyclingverfahren aus zertifiziert nicht-kontaminierten natürlichen mineralischen Rohstoffen gewonnen werden. Vorzugsweise werden die natürlichen mineralischen Rohstoffe weder thermisch noch chemisch vor- oder nachbehandelt

Die natürlichen mineralischen Rohstoffe sind jeder einzeln für sich, wie auch als Gemische, respektive in der efindungsgemässen Endzusammensetzung in der natürlichen Umgebung unter Umgebungsbedingungen (zu Land, Wasser und Eis) chemisch inert. Sie sind deshalb für Mensch, Tier, Pflanzen und Umwelt sowohl bei Langzeitlagerung, Transport, Einsatz wie auch bei der Entsorgung absolut unschädlich.

Die natürlichen mineralischen Rohstoffe werden zur Herstellung der erfindungsgemässen Zusammensetzungen lediglich auf die für die Erfindung effizient wirkende notwendige Korngrösse heruntergebrochen bzw. gemahlen und miteinander gemischt Damit resultiert für die Zusammensetzungen eine Gesamtkornoberfläche, an welche sich die die Verschmutzung bewirkenden Kohlenwasserstoffe, zum Beispiel das Rohöl mengenmässig optimal adhesiv ansetzt (Monomolekularebene).

Zur Beseitigung eines auf der Oberfläche eines Gewässers schwimmenden Ölteppichs genügt es, die efindungsgemässe Zusammensetzung über dem Ölteppich auszustreuen, respektive über den Ölteppich auszublasen. Die erfindungsgemässe Zusammensetzung hat nämlich die vorteilhafte und verblüffende Eigenschaft, dass sie sich spontan mit dem Öl verbindet und das Sorbat ohne die Bildung von grösseren Klumpen von der Wasseroberfläche zum Grund des Gewässers absinkt und sich dort als feines Sediment absetzt. Innerhalb weniger Stunden oder Tage sind bei Einsatz genügender Mengen der erfindungsgemässen

Zusammensetzung praktisch keine giftigen Kohlenwasserstoffe im behandelten Wasser mehr nachweisbar. Laborversuche haben gezeigt, dass sogar Trinkwasserqualität erreichbar ist

Durch die neue erfindungsgemässe Zusammensetzung in Pulverform wird das Öl in mikroskopisch kleinste Teile zerlegt Die Pulverpartikel binden die Ölteilchen durch Adsorption, indem sie sich um die Öltröpfchen herum anordnen. Durch das höhere spezifische Gewicht des erfindungsgemässen Pulvers, das vorzugsweise zwischen 2.5 und 3.5, besonders bevorzugt um 3.0 liegt, sinken die Teile des Öl-Pulverkomplexes vollständig zum Grund des jeweiligen Gewässers. Die vorliegende Erfindung nutzt die Physisorption, eine spezielle Form der Adsorption, bei der das Sorptiv durch physikalische Kräfte und nicht durch die Ausbildung von chemischen Bindungen an das Sorbens gebunden wird. Die hier wirkenden physikalischen Kräfte sind in der Regel ungerichtet und besitzen den Vorteil, dass die Bindungen reversibel sind. Das Sorptiv kann also wieder vom Sorbens abgegeben werden, was den mikrobiellen Abbau des Öls unterstützt.

Auch durch heftige Wasserturbulenzen kann das abgesunkene Öl nicht wieder von der erfindungsgemässen Zusammensetzung getrennt werden und somit nicht mehr an die Oberfläche des Gewässers auftreiben.

Da das Rohöl an die Partikel der Zusammensetzung adsorbiert ist, wird die effektive Oberfläche, die den ölabauenden Mikroorganismen zum Angriff zur Verfügung steht, enorm vergrössert. Der Abbau des Öls wird dadurch ermöglicht, enorm beschleunigt bis zur vollständigen Zersetzung des Öls. Die mikroskopisch kleinen Öltröpfchen dienen als Substrat für die üppige Entwicklung der am Abbau beteiligten Mikroorganismen. Abhängig von der geologischen Region und den herrschenden Umweltbedingungen wird das Öl binnen 3 bis 4 Monaten restlos abgebaut Die Biodegradation, respektive die Remediation, findet daher vorzugsweise *in situ* statt. Durch den erfindungsgemässen in situ Abbau der giftigen Kohlenwasserstoffverbindung erübrigt sich das schwierige und kostenintensive Absaugen der Öl-Bindemittelgemische von der Wasseroberfläche und die anschliessende Entsorgung, Deponierung oder Aufarbeitung dieser hoch problematischen Abfälle, die wie oben erwähnt oft dazu führen, dass bei Ölverschmutzungen keinerlei Massnahmen zur Reinigung ergriffen werden.

Zum Abbau von Rohöl oder anderen Kohlenwasserstoff-Verschmutzungen geeignete Mikroorganismen werden der Zusammensetzung beigegeben und bilden in einer vorteilhaften Ausführungsform einen wichtigen Bestandteil des Produktes. Die Mikroorganismen sind so formuliert, dass ihre Lagerfähigkeit und ihre Fliessfähigkeit gewährleistet sind. Die Formulierung erfolgt vorzugsweise in Form von Peletten oder Kapseln. Beim Einsatz insbesondere von systemfremden Mikroorganismen sind nationale oder lokale Vorschriften zu beachten und einzuhalten. Da diese in der geeigneten fiiessfähigen Formulierung sogar vor Ort problemlos zugemischt werden können, kann der Mikroorganismenanteil ohne grossen Aufwand an die für den jeweiligen Einsatzort geltenden Bestimmungen angepasst werden.

Die genaue Zusammensetzung des Produktes in Pulverform und die Korngrösse der Bestandteile, wird vorzugsweise an die Beschaffenheit des zu entfernenden Öls angepasst.

Die Zusammensetzung mit einem spezifischen Gewicht von etwa 3 g/cm³, ist eine Zusammensetzung verschiedener Gesteine bzw. natürlich vorkommenden Mineralien in Pulverform. Eine essentielle Hauptkomponente der efindungsgemässen Zusammensetzung ist Siliciumdioxid (SiO₂). Der Stoff ist unter normalen Umgebungsbedingungen eine inerte chemische Verbindung und weist ein spezifisches Gewicht von 2.7 g/cm³ (SiO₂) auf. Die Korngrösse der einzelnen Bestandteile oder Komponenten der erfindungsgemässen Zusammensetzung liegt vorzugsweise zwischen 100 bis 600 Mikrometer. Zumindest sollten mehr als 50 % der Zusammensetzung in Pulverform unterhalb 400 Mikrometer liegen.

Als günstig oder möglich haben sich folgende prozentualen Anteile für die einzelnen vorgenannten Bestandteile (in Gewichtsprozent) erwiesen:
0-40 % Quarzsand (SiO₂)
0-60 % Siliciumcarbid (SiC), nicht zur Erfindung gehörendes Verglachs-beispiel
5-40 % Granitmehl
5-40 % Kieselkalkmehl

2 bis 14 % Gew. Kalzium (CaCO₃) können als optionale Komponenten rungsformen der Zusammensetzung zugegeben sein. Das Kieselkalkmehl kann ganz oder teilweise durch CaCO₃ in Form von Marmormehl ersetzt sein.

Innerhalb der vorgenannten Grenzen wird gemäss eines nicht zur Erfindung gehörenden Vergleichs-beispiels bevorzugt.
20 % Quarzsand (SiO₂)
20% SiC
40 % Granitmehl
15 % Kieselkalkmehl
5 % CaCO₃

Das im Vergleichsbeispiel angegebene Mittel enthält gemäss einer bevorzugten-Ausführungsform Siliciumkarbid mit einer hexagonalen Kristallstruktur.

Durch die Erhöhung des Anteils an Granitmehl oder SiO₂, vorzugsweise in der Form von Quarzsand, lässt sich Siliciumkarbid einsparen bzw. ersetzen und durch das Kieselkalkmehl erhöht sich vor allem die Affinität des efindungsgemässen Mittels zu Öl.

Innerhalb der vorgenannten Grenzen werden daher als weitere bevorzugte Ausführungsform folgende Zusammensetzungen vorgeschlagen:
40% Quarzsand (SiO₂)
40 % Granitmehl
15 % Kieselkalkmehl
5 % CaCO₃
und besonders bevorzugt
20% Quarzsand (SiO₂)
40 % Granitmehl
20 % Kieselkalkmehl
20 % CaCO₃ vorzugsweise als Marmormehl
wobei in weiteren Ausführungsformen Kieselkalkmehl zumindest teilweise durch Ton, insbesondere durch Ziegel- oder Ziegeleitone, ersetzt sind.

Wie oben erwähnt soll die Korngrösse des SiO₂ sowie auch die der übrigen eingesetzten Stoffe vorzugsweise zwischen 60 und 600 Mikrometer betragen. Vorzugsweise sollten mehr als 50 % aller Partikel in einem Grössenbereich unterhalb von 350 Mikrometer liegen. Besonders bevorzugt liegen bei den efindungsgemässen Zusammensetzungen annähernd alle Partikel in einem Grössenbereich unterhalb von 350 Mikrometer vor.

Da beim Einsatz des im Vergleich zu SiC günstigeren, aber leichteren SiO₂ das spezifische Gewicht der Zusammensetzung abnimmt wird in einer weiteren bevorzugten Ausführungsform 10 bis 15 % des Granitmehls durch Granatsand mit einem spezifischen Gewicht von 4.1 g/m³ ersetzt

Die oben beschriebenen Komponenten setzen sich wie folgt zusammen:

### Komponente Kieselkalk

| Mineraliengehalt | Anteil in Gew-% | Chemische Formel |
|---|---|---|
| Quarz/Silicium | 25 | SiO₂ |
| Kalzit | 65 | CaCO₃ |
| Dolomit | 1 | CaCO₃ MgCO₃ |
| Pyrit | 1 | FeS |
| Ton (Montmorillonit) | 5 | (Na,Ca) (Al,Mg)₂ Si₄O₁₀ (OH)₂ 4H₂O |
| Organische Stoffe | 3 | komplexe (CₓH_{y}S_{z})-Verbindungen |

### Nicht erfindungsgemässe Komponente Siliciumkarbid

| Mineraliengehalt | Anteil in Gew-% | Chemische Formel |
|---|---|---|
| Silicium | 50 | Si |
| Kohlenstoff | 50 | C |

### Komponente Quarzsand

| Mineraliengehalt | Anteil in Gew-% | Chemische Formel |
|---|---|---|
| Quarz/Silicium | 100 | SiO₂ |

### Komponente Granit

| Mineraliengehalt | Anteil in Gew-% | Chemische Formel |
|---|---|---|
| Quarz/Silicium | 40 | SiO₂ |
| Feldspatreihe (Plagioklas/Orthoklas) | 50 | (K,Na,Ca) (AlₓSi_{y}O₂) |
| Glimmerreihe (Muskowit/Biotit) | 10 | (K,Alₓ,Mg_{y}) (F,OH)₂ (AlSi₃Ol₀) |

In weiteren Ausführungsformen können folgende optionale Komponenten zum Einsatz kommen:

### Komponente Granatsand

| Mineraliengehalt | Anteil in Gew-% | Chemische Formel |
|---|---|---|
| Almandin | 100 | (Fe,Ca,Mg)ₓ Al₂(SiO₄)₃ |

In einer vorteilhaften Ausführungsform wurden 10 bis 15 % des Granitmehls durch Granatsand ersetzt.

Zusammensetzungen gemäss bevorzugter Ausführungsformen der vorliegenden Erfindung sind in der folgenden Tabelle mit weiteren Merkmalen und bevorzugten Bereichen, in der Tabelle Bandbreiten genannt, offenbart

| Rohstoff | Chem. Zusammensetzung | Bandbreiten Mengen | Optimale Mengen | Bandbreite Korngrössen |
|---|---|---|---|---|
| (Gestein/Mineral) | (Formel) | (Gew-%) | (Gew-%) | (µm) |
| Kieselkalk | | 5-35% | 20% (+/- 2.5%) | 80 - 100 µm |
| *Bestandteile:* | | | | |
| Quarz | SiO₂ | | 42% (+/- 2.5%) | |
| Kalzium: | CaCO₃ | | 46% (+/- 2.5%) | |
| Dolomit | Ca;Mg (CO₃)₂ | | 1% (+/- 2.5%) | |
| Glaukonit: | (K,Na)(Fe,Al,Mg)₂ (OH)₂(Si,Al)₄O₁₀ | | 1% (+/- 2.5%) | |
| Ton: (Montmorillonit) | (Na,Ca)(Al,Mg)₂ Si₄O₁₀ (OH)₂ 4H₂O | | 5% (+/- 2.5%) | |
| Pyrit / Eisen: | FeS₂ / Fei0₃ | | 1% (+/- 2.5%) | |
| Organische Stoffe: | (CₓH_{y})-Komplexe | | 1% (+/- 2.5%) | |
| Div. Mineralien: | (Silikate) | | 3% (+/- 2.5%) | |
| | | | | |
| Quarz | | 5-35% | 20% (+/- 2.5%) | 100 - 160 µm |
| Bestandteile: | | | | |
| Quarz: | SiO₂ | | 100% | |
| | | | | |
| Kalk | | 5-35% | 20% (+/- 2.5%) | 200 - 300 µm |
| *Bestandteile:* | | | | |
| Kalzium: | CaCO₃ | | 100% | |
| | | | | |
| Granit | | 20-60% | 40% (+/- 2.5%) | 150 - 350 µm |
| *Bestandteile:* | | | | |
| Quarz | SiO₂ | | 35% (+/- 2.5%) | |
| K-Feldspat: | K(AlSi₃O₈) | | 29% (+/- 2.5%) | |
| Na-Feldspat: | Na(AlSi₃O₈) | | 29% (+/- 2.5%) | |
| Glimmer: | (KAlₓMg_{y})(F,OH)_{z} (AlSi₃O₁₀) | | 4% (+/- 2.5%) | |
| Hornblende: | Ca₂(Fe,Mg)₄ Al(Si₇Al)O₂₂ (OH,F)₂ | | 3% (+/- 2.5%) | |

Die vorgenannten, natürlichen mineralischen Bestandteile können, wie vorgängig bereits teilweise beschrieben wurde, durch gleiche mineralische Bestandteilen anderer natürlicher Rohstoffe ganz oder teilweise ersetzt werden oder aus gleichen natürlichen mineralischen Bestandteilen anderer Herkunft zusammengefügt werden.

Es hat sich gezeigt, dass durch die Korngrössenfraktionierung der einzelnen natürlichen mineralischen Rohstoffe die bei den erfindungsgemässen Zusammensetzungen zum Einsatz kommen und der Mischung dieser ein für die Erfindung optimales Schüttgewicht erreicht werden kann, welches das umweltverschmutzende Rohöl im Anschluss an den Adhäsionsprozess im Wasser (Süsswasser und Salzwasser) zum Sinken bringt.

| Rohstoff | spez. Gewicht | Schüttgewicht |
|---|---|---|
| | | (resultierend aus der Korngrössenfraktionierung) |
| | | |
| Kieselkalk | 2.67 | 0.90 |
| Quarz | 2.65 | 0.90 |
| Kalk | 2.50 | 0.84 |
| Granit | 2.70 | 0.91 |
| Ø | 2.64 | 0.89 |

Für den Adhäsionsprozess hat sich ein durchschnittliches spezifisches Gewicht der erfindungsgemässen Zusammensetzung von 2.64 als vorteilhaft erwiesen.

Vorzugsweise werden 6 bis 10 Kilogramm, besonders bevorzugt 8 Kilogramm, von der erfindungsgemässen Zusammensetzung pro 1 Kilogramm Rohölverschmutzung eingesetzt

### Testbeispiel 1

Normales Leitungswasser (Süsswasser) wurde durch Zugabe von Meersalz auf den üblichen Salzgehalt von Meerwasser eingestellt

In einem Versuchsgefäss wurden zu einem Liter des so gewonnenen Salzwassers 20 ml Rohöl (sog. Curde-Oil) unter schwachem Rühren zugegeben.

Auf das im wesentlichen auf der Oberfläche des Salzwassers schwimmende Öl (ein Teil des Öles war jedoch auch in Form kleiner Tröpfchen im Wasser verteilt) wurde von dem erfindungsgemässen Mittel in der oben genannten bevorzugten Zusammensetzung gerade so viel ausgestreut, dass die gesamte auf der Wasseroberfläche schwimmende Ölschicht mit einer etwa gleichmässig dünnen Schicht des erfindungsgemässen Mittels bedeckt war.

Bereits wenige Sekunden nach dem Ausstreuen eines efindungsgemässen Mittels mit 40% Quarzsand (Komgrösse von 0.2 bis 0.3 mm), 40 % Granitmehl, 15 % Kieselkalkmehl und 5 % CaCO₃ ging dieses mit dem Öl eine Verbindung ein, verschwand von der Wasseroberfläche und setzte sich in der Folge langsam als feines Sediment auf dem Grund des Versuchsgefässes ab. Das Wasser wurde schnell klarer und nach bereits etwa einem Tag war optisch sowie vom Geruch her kein Öl mehr im Wasser feststellbar. Das Öl war vollständig im Sediment gebunden.

### Vergleichsbeispiel

Normales Leitungswasser (Süsswasser) wurde durch Zugabe von Meersalz auf den üblichen Salzgehalt von Meerwasser eingestellt

In einem Versuchsgefäss wurden zu einem Liter des so gewonnenen Salzwassers 20 ml Rohöl (sog. Curde-Oil) unter schwachem Rühren zugegeben.

Auf das im wesentlichen auf der Oberfläche des Salzwassers schwimmende Öl (ein Teil des Öles war jedoch auch in Form kleiner Tröpfchen im Wasser verteilt) wurde von dem erfindungsgemässen Mittel gemäss einer oben genannten bevorzugten Zusammensetzung gerade so viel ausgestreut, dass die gesamte auf der Wasseroberfläche schwimmende Ölschicht mit einer etwa gleichmässig dünnen Schicht des efindungsgemässen Mittels bedeckt war.

Bereits wenige Sekunden nach dem Ausstreuen eines weiteren erfindungsgemässen Mittels mit 40% SiC, 40 % Granitmehl, 15 % Kieselkalkmehl und 5 % CaCO₃ ging dieses mit dem Öl eine Verbindung ein, verschwand von der Wasseroberfläche und setzte sich in der Folge langsam als feines Sediment auf dem Grund des Versuchsgefässes ab. Das Wasser wurde wiederum schnell klarer und nach bereits etwa einem Tag war optisch sowie vom Geruch her kein Öl mehr im Wasser feststellbar. Das Öl war vollständig im Sediment gebunden.

Nach 2 Tagen wurde eine Probe (500 ml) des mit dem erfindungsgemässen Mittel behandelten Wassers entnommen.

Die Wasserprobe wurde Ober eine C18-Säule gewaschen und ein Aliquot des Eluens instrumental-analytisch auf Ölspuren untersucht. Dies erfolgte Ober ein Gaschromatograph-Massenspektrometer-System der Firma Hewlett-Packard. Nach kapillargaschromatographischer Trennung wurden ionenselektiv die Massen 43 und 57 erfasst. Es ergaben sich in der untersuchten Wasserprobe lediglich 0.05 mg/Liter an diesen Massen, d. h. an Kohlenwasserstoff- bzw. Ölrückständen.

In einer Salzwasser-Referenzprobe, der kein Öl und entsprechend auch nichts vom dem erfindungsgemässen Mittel zugesetzt worden war, wurden 0.02 mg/Liter Kohlenwasserstoffe nachgewiesen.

Nach den derzeit in der Schweiz geltenden Vorschriften betreffend den maximal zulässigen Kohlenwasserstoffgehalt in Wasser betragen die Grenzwerte für Einleitungswasser in die öffentliche Kanalisation 20 mg/Liter, für Einleitungswasser in freie Gewässer wie Flüsse oder Seen 10 mg/Liter und für Fliesswässer und Flussstaue 0.05 mg/Liter. Für Trinkwasser wird ein Wert von 0.01-0.05 angenommen. Nachdem in der untersuchten Probe lediglich 0.05 mg/Liter Kohlenwasserstoffe gefunden wurden, ist diese vergleichbar mit den Qualitätszielen für Trinkwasser.

### Tests zur Effektivität der Bioremediation

Mit der efindungsgemässen Zusammensetzung gebunden können die umweltschädlichen Kohlenwasserstoffe in kurzer Zeit auf natürlichem Wege abgebaut werden. Die bei dem oben beschriebenen internen Versuchgemachten Beobachtungen lassen den Schluss zu, dass der natürliche Abbau der Kohlenwasserstoffe unter Einsatz der efindungsgemässen Zusammensetzung beschleunigt vonstatten geht, beziehungsweise von dieser überhaupt erst ermöglicht wird. in einem Bioremediation Effectiveness Test gemäss US Environmental Protection Agency (EPA) Protokoll (nach 40 CFR Chapter 1 (7-1-99) Pt. 300 Appendix C, Item 4.o) wurde vom unabhängigen zertifizierten Prüflabor Bio-Aquatic Testing in Carrollton, TX, USA nachgewiesen, dass die Behandlung mit der Zusammensetzung (40% SiC, 40 % Granitmehl, 15 % Kieselkalkmehl und 5 % CaCO₃) gemäss Vergleichsbeispiel von mit Rohöl verunreinigtem Meerwasser innerhalb von 28 Tagen zu einer Reduktion der Alkane um 46.6 % gegenüber unbehandelten Kontrollproben führte. Die Reduktion der aromatischen Verbindungen lag bei den mit der erfindungsgemässen Zusammensetzung behandelten ölverschmutzten Meerwasserproben sogar um 86.6 % über dem Wert der unbehandelten Kontrollen. Bei den behandelten Proben kam es um eine Reduktion der Ölmasse um 52.7 % im Vergleich zu den unbehandelten Kontrollgruppen. Beim Öl, das in den Versuchen eingesetzt wurde handelt es sich um Alaska North Slope 521, wie es von EPA Environmental Monitoring ans Support Laboratory in Cincinnati, Ohio, USA bezogen werden kann.

Gemäss der Erfindung werden die Zusammensetzungen vorzugsweise in Form eines fliessfähigen Pulvers mit geeigneten Gerätschaften auf die zu behandelten Ölflächen aufgetragen. Bei Versuchen haben sich dabei Gebläse bewährt, wie sie zum Beispiel beim Sandstrahlen zum Einsatz kommen. Je nach Art und Beschaffenheit des Öls können damit die Einzelkomponenten der erfindungsgemässen Zusammensetzung vor Ort variiert werden. Das heisst, die Zusammensetzung wird nicht vorgemischt an den Einsatzort gebracht, sondern sie wird vor Ort, vorzugsweise durch das Sandstrahlgebläse, aus den einzelnen Komponenten zusammengemischt

Es versteht sich, dass die Mischung gegebenenfalls für den jeweiligen Anwendungszweck und unter Berücksichtigung der Beschaffenheit des zu entfernenden Öles anders zusammengestellt werden kann. Ausser zur Absenkung und Bindung von auf einer Wasseroberfläche schwimmendem Öl durch Ausstreuen über dem Öl kann das erfindungsgemässe Mittel auf Grund seiner vorteilhaften Eigenschaften selbstverständlich auch für andere konkrete Zwecke oder auf andere als die beschriebene Art verwendet werden. Z. B. kann das Mittel auch bei einer Kontaminierung von Erdreich mit Öl oder Kohlenwasserstoffen, zur Reduktion von Öl oder Kohlenwasserstoffen in Wasser jeder Art oder ganz allgemein zur Verbesserung der Wasserqualität eingesetzt werden.

## Patentansprüche

1. Zusammensetzung zur Bioremediation von mit Kohlenwasserstoffen, insbesondere mit Öl verschmutztem Wasser mit Siliciumdioxid (SiO₂) in Pulverform, die als ein mineralisches Pulver Granitmehl und Kieselkalkmehl und Quarzsand umfasst, **dadurch gekennzeichnet, dass** die Zusammensetzung, 5-35 Gew-% Quarzsand, 20-60 Gew-% Granitmehl und 10-70 Gew-% ausgewählt aus der Gruppe: Kieselkalkmehl, Kalk oder Marmormehl oder Gemischen davon, umfasst.

2. Zusammensetzung nach Anspruch 1, **dadurch gekennzeichnet, dass** sie ein mineralisches Pulver ausgewählt aus der Gruppe: (K,Na,Ca) (AlₓSi_{y}O₂) und/oder (K,Alₓ,Mg_{y}) (F,OH)₂ (AlSi₃O₁₀) umfasst.

3. Zusammensetzung nach einem der Ansprüche 1 bis 2, **dadurch gekennzeichnet, dass** sie ein mineralisches Pulver ausgewählt aus der Gruppe: SiO₂, CaCO₃, CaCO₃ MgCO₃, FeS und/oder (Na,Ca) (Al,Mg)₂ Si₄O₁₀ (OH)₂ 4H₂O umfasst.

4. Zusammensetzung nach einem Anspruch 1 bis 3 **dadurch gekennzeichnet, dass** sie 20-60 Gew-% Granitmehl, 5-35 Gew-% Quarzsand, 5-35 Gew-% Kalk und 5-35 Gew-% Kieselkalkmehl umfasst.

5. Zusammensetzung nach Anspruch 1 bis 4, **dadurch gekennzeichnet, dass** sie 20 Gew-% Quarzsand, 40 Gew-% Granitmehl, 20 Gew-% Kieselkalkmehl und 20 Gew-% Kalk vorzugsweise in Form von Marmormehl umfasst

6. Zusammensetzung nach einem der Ansprüche 1 bis 5, **dadurch gekennzeichnet, dass** 10 bis 15 % des Granitmehls durch Granatsand ersetzt sind.

7. Zusammensetzung nach einem der Ansprüche 1 bis 6, **dadurch gekennzeichnet, dass** die Korngrösse der einzelnen Komponenten zwischen 60 und 600 Mikrometern liegt, wobei vorzugsweise jeweils mehr als 50 % der einzelnen Partikel im Bereich unterhalb von 350 Mikrometer liegen.

8. Zusammensetzung nach einem der Ansprüche 1 bis 7, **dadurch gekennzeichnet, dass** die Zusammensetzung als fliess- und/oder rieselfähiges Pulver vorliegt.

9. Zusammensetzung nach einem der Ansprüche 1 bis 8, **dadurch gekennzeichnet, dass** ölabbauende Mikroorganismen in Form von Peletten oder Kapseln zugesetzt sind.

10. Verfahren zur Bioremediation von mit Kohlenwasserstoffen, insbesondere mit Rohöl verschmutztem Gewässern mit einer Zusammensetzung nach einem der Ansprüche 1 bis 9, wobei die Zusammensetzung als Sorbens direkt auf die zu entfernende Verschmutzung ausgebracht wird, so dass die Kohlenwasserstoffe adsorbiert werden und mit dem Sorbens absinken wodurch das Wasser annähernd vollständig von der Verschmutzung befreit wird.

11. Verfahren nach Anspruch 10, **dadurch gekennzeichnet, dass** die adsorbierten Kohlenwasserstoffe, insbesondere das adsorbierte Rohöl in situ abgebaut wird.

12. Verfahren nach Anspruch 10 oder 11, **dadurch gekennzeichnet, dass** pro Kilogramm Kohlenwasserstoff acht Kilogramm der Zusammensetzung gemäss einem der der Ansprüche 1 bis 11 eingesetzt werden.

## Claims

1. A composition for the bioremediation of water contaminated with hydrocarbons, in particular with oil, with silicon dioxide (SiO₂) in powder form, comprising as a mineral powder granite meal and siliceous limestone and silica sand , **characterised in that** the composition comprises 5-35% by weight of silica sand, 20-60% by weight of granite meal and 10-70% by weight selected from the group: meal of siliceous limestone, limestone or marble meal, or mixtures thereof.

2. The composition according to claim 1, **characterised in that** it comprises a mineral powder selected from the group: (K,Na,Ca) (AlₓSi_{y}O₂) and/or (K, Alₓ,Mg_{y}) (F,OH)₂ (AlSi₃O₁₀).

3. The composition according to claim 1 to 2, **characterised in that** it comprises a mineral powder selected from the group: SiO₂, CaCO₃, CaCO₃MgCO₃, FeS and/or (Na,Ca)(Al,Mg)₂ Si₄O₁₀(OH)₂4H₂O.

4. The composition according to claim 1 to 3, **characterised in that** it comprises 20-60% by weight of granite powder, 5-35% by weight of silica sand, 5-35% by weight of lime, and 5-35% by weight of meal of siliceous limestone.

5. The composition according to claim 1 to 4, **characterised in that** it comprises 20% by weight of silica sand, 40% by weight of granite meal, 20% by weight of meal of siliceous limestone and 20% by weight of lime, preferably in form of marble meal.

6. The composition according to one of the above mentioned claims 1 to 5, **characterised in that** 10-15% of the granite meal are replaced by garnet sand.

7. The composition according to one of the claims 1 to 6, **characterised in that** the grain size of the individual components lies between 60 and 600 micrometers, wherein preferably in each case more than 50 % of the individual particles lie in the range below 350 micrometers.

8. The composition according to one of the claims 1 to 7, **characterised in that** the composition is a free-flowing powder.

9. The composition according one of the claims 1 to 8, **characterised in that** oil-decomposing micro-organisms are added in the form of pellets or capsules.

10. A method for the bioremediation of water bodies contaminated with hydrocarbons, in particular with crude oil, with a composition according to one of the claims 1 to 9, wherein the composition is applied as a sorbent directly onto the contamination to be removed, so that the hydrocarbons are adsorbed, and sink with the sorbent, by which means the water is approximately completely freed from the contamination.

11. The method according to claim 10, **characterised in that** the adsorbed hydrocarbons, in particular the adsorbed crude oil, is decomposed in situ.

12. The method according to claim 10 or 11, **characterised in that** 8 kg of the composition according to one of the claims 1 to 11 is applied for each 1 kg of hydrocarbons.

## Revendications

1. Composition pour la bioremédiation d'eau polluée avec des hydrocarbures, en particulier avec de l'huile, à l'aide de dioxyde de silicium (SiO₂) sous forme de poudre, qui comprend sous forme d'une poudre minérale de la poudre de granite et de la poudre de calcaire siliceux et du sable quartzeux, **caractérisée en ce que** la composition comprend 5-35 % en poids de sable quartzeux, 20-60 % en poids de poudre de granite et 10-70 % en poids choisis dans le groupe : poudre de calcaire siliceux, chaux ou poudre de marbre ou mélanges de ceux-ci.

2. Composition selon la revendication 1, **caractérisée en ce qu'**elle comprend une poudre minérale choisie dans le groupe : (K,Na,Ca) (AlₓSi_{y}O₂) et/ou (K,Alₓ,Mg_{y}) (F,OH)₂ (AlSi₃O₁₀).

3. Composition selon la revendication 1 à 2, **caractérisée en ce qu'**elle comprend une poudre minérale choisie dans le groupe : SiO₂, CaCO₃, CaCO₃ MgCO₃, FeS et/ou (Na,Ca) (Al,Mg)₂ Si₄O₁₀ (OH)₂ 4H₂O.

4. Composition selon l'une quelconque des revendications 1 à 3, **caractérisée en ce qu'**elle comprend 20-60 % en poids de poudre de granite, 5-35 % en poids de sable quartzeux, 5-35 % en poids de chaux et 5-35 % en poids de poudre de calcaire siliceux.

5. Composition selon l'une quelconque des revendications 1 à 4, **caractérisée en ce qu'**elle comprend 20 % en poids de sable quartzeux, 40 % en poids de poudre de granite, 20 % en poids de poudre de calcaire siliceux et 20 % en poids de chaux de préférence sous forme de poudre de marbre.

6. Composition selon l'une quelconque des revendications 1 à 5, **caractérisée en ce que** 10 à 15 % en poids de la poudre de granite sont remplacés par du sable de grenat.

7. Composition selon l'une quelconque des revendications 1 à 6, **caractérisée en ce que** la taille de grain des composants individuels est comprise entre 60 et 600 micromètres, plus de 50 % des particules individuelles se situant de préférence dans chaque cas dans la plage inférieure à 350 micromètres.

8. Composition selon l'une quelconque des revendications 1 à 7, **caractérisée en ce que** la composition se trouve sous forme de poudre fluide et/ou apte à l'écoulement.

9. Composition selon l'une quelconque des revendications 1 à 8, **caractérisée en ce que** des micro-organismes dégradant l'huile sont ajoutés sous forme de granules ou de capsules.

10. Procédé pour la bioremédiation d'eaux polluées avec des hydrocarbures, en particulier avec du pétrole brut, à l'aide d'une composition selon l'une quelconque des revendications 1 à 9, dans lequel on applique la composition en tant qu'adsorbant directement sur le polluant à éliminer, de sorte que les hydrocarbures sont adsorbés et descendent avec l'adsorbant, ce qui permet à l'eau d'être presque totalement libérée du polluant.

11. Procédé selon la revendication 10, **caractérisé en ce que** les hydrocarbures adsorbés, en particulier le pétrole brut adsorbé, sont dégradés in situ.

12. Procédé selon la revendication 10 ou 11, **caractérisé en ce que** par kilogramme d'hydrocarbure on utilise huit kilogrammes de la composition selon l'une quelconque des revendications 1 à 11.
